# EUROPÄISCHE PATENTANMELDUNG

(11) **EP 1 354 725 A1**
(43) Veröffentlichungstag der Anmeldung: **22.10.2003**
(21) Anmeldenummer: 03007595.6
(22) Anmeldetag: 02.04.2003
(51) Int. Cl.: B60C 1/00, C08L 9/00, C08L 9/06, C08K 3/36

(54) **Vulkanisierbare Kautschukmischungen**

(30) Priorität: 15.04.2002 DE 10216657
(71) Anmelder: Rhein Chemie Rheinau GmbH, 68219 Mannheim (DE)
(72) Erfinder: Heiliger, Ludger, Dr., 67433 Neustadt (DE); Früh, Thomas, Dr., 61117 Limburgerhof (DE); Meiers, Michaela, Dr., 67346 Speyer (DE)
(74) Vertreter: Bailly, Peter, Dr.

(57) **Zusammenfassung**

Die Erfindung betrifft mit Schwefel vulkanisierbare silikahaltige Kautschukmischungen mit verbesserter Prozessfähigkeit.

## Beschreibung

Gegenstand der Erfindung sind mit Schwefel vulkanisierbare silikahaltige Kautschukmischungen mit verbesserter Prozessfähigkeit, dadurch gekennzeichnet, dass sie
a) ein silanhaltiges Butadienöl und/oder Polyisoprenöl
b) einen Schwefelspender mit Schmelzpunkt < 100 °C und neben den üblichen Hilfsmitteln
c) 5 bis 120 Teile einer Kieselsäure,
d) 0 bis 100 Teile eines Gummirußes, jeweils bezogen auf 100 Teile der ebenfalls enthaltenden
e) Kautschkpolymere, wie beispielsweise Styrol-Butadienkautschuk, Butadienoder Naturkautschuk, bzw. Verschnitte dieser Kautschukpolymeren enthalten.

Die Erfindung betrifft ein Verfahren zur Herstellung vulkanisierbarer Kautschukmischungen und die so hergestellten Mischungen.

Einsparungen im Kraftstoffverbrauch und eine Reduzierung des Schadstoffausstoßes bekommen heute mit zunehmendem Umweltbewusstsein eine wachsende Priorität. Für den Reifenhersteller bedeutet dies, Reifen zu entwickeln, die sich durch einen sehr niedrigen Rollwiderstand bei exzellenter Nassrutschfestigkeit und guten Abriebwiderstand auszeichnen.

In zahlreichen Veröffentlichungen und Patenten werden Vorschläge gemacht, den Rollwiderstand eines Reifens und damit den Kraftstoffverbrauch zu senken. Genannt werden hierbei die Reduzierung des Rußgehaltes in der Mischung sowie die Verwendung spezieller Ruße (US-A 4 866 131, US-A 4 894 420). Keiner dieser Lösungsvorschläge führte jedoch zu einer befriedigenden Balance zwischen dem zu erzielenden niedrigen Rollwiderstand und den ebenfalls wichtigen Reifeneigenschaften wie Nassrutschfestigkeit und Abriebwiderstand.

Erst die Verwendung von hochaktiven Kieselsäurefüllstoffen in Kombination mit einem weitgehenden Austausch des Rußes in der Kautschukmischung scheint hier einen Weg aufzuzeigen, der die Herstellung eines Reifens mit gegenüber den Standardreifen deutlich reduziertem Rollwiderstand unter gleichzeitiger Beibehaltung oder sogar Verbesserung der beiden weiteren obengenannten Reifeneigenschaften ermöglicht.

Eine weitere Optimierung dieses Systems hinsichtlich aller drei Eigenschaften gelang durch die Verwendung spezieller Styrol-Butadien-Polymere, hergestellt nach dem Lösungspolymerisationsverfahren (EP-A 0 447 066), teilweise im Blend mit anderen Polymeren, insbesondere Polybutadien und zusätzliche Verwendung neuer Kieselsäuretypen (US-A 5 227 425) sowie speziell auf diesen Einsatz zugeschnittene Polymerblends (EP-A 0 620 250) mit zum Teil drei bis vier unterschiedlichen Ausgangspolymeren.

All diesen Veröffentlichungen und Patenten ist zu eigen, dass zur Erzielung eines niedrigen Rollwiderstandes bei Erhalt oder gar Verbesserung von Nassrutschfestigkeit und Abriebwiderstand ein großer Teil bzw. der gesamte Gehalt des normalerweise verwendeten Rußfüllstoffes durch eine hochaktive Kieselsäure ersetzt wird. In allen Fällen wurde zur Erzielung der heute geforderten Reifeneigenschaften ein schwefelenthaltendes Organosilan als Coupler zwischen Kieselsäure und Polymer eingesetzt.

Ein typischer Vertreter dieser Verbindungsklasse ist Bis(triethoxysilylpropyl)-tetrasulfan (TESPT).

Zwar werden durch die Verwendung von Bis(triethoxysilylpropyl)tetrasulfan (TESPT) wichtige gummitechnologische Eigenschaften, wie die bereits genannten dynamischen Eigenschaften verbessert, erkauft wird dies jedoch mit einer verglichen zu rußgefüllten Kautschukmischungen wesentlich aufwendigereren Mischungsherstellung und Verarbeitung. (H.-D. Luginsland "Processing of the Organo Silane Si 69" *The International Rubber Chemicals and Compounding Conference*, 22^{nd} - 23^{nd} Nov. 1999, Antwerpen, Belgien).

So sind silicagefüllte Laufflächenmischungen, die das dem Stand der Technik entsprechende 3,3-Bis(triethoxysilylpropyl)tetrasulfid enthalten, extrem scorch-gefährdet und dürfen bei der Mischungsherstellung im Innenmischer auf keinen Fall die Temperaturgrenze von 160 °C überschreiten.

Dies führt dazu, dass silicagefüllte Laufflächenmischungen immer mehrfach, gelegentlich bis zu fünfmal gemischt, abgekühlt und gelagert werden, bevor die Rohmischungen beschleunigt und weiterverarbeitet werden können, wohingegen bei rußgefüllten Laufflächenmischungen bereits nach zweimaligem Mischen bei höheren Mischungstemperaturen die Mischungen weiterverarbeitet werden können. Dadurch bewirken silicagefüllte Reifenmischungen einen enormen Produktivitätsabfall im gesamten Herstellungsprozess des Reifenbauers.

Es ist also wünschenswert, eine Verbindung herzustellen, welche es erlaubt, die verbesserten Eigenschaften der silicagefüllten Mischungen zu erreichen, aber trotzdem bei der Verarbeitung Mischungstemperaturen oberhalb 160 °C zulässt und damit weniger Mischstufen als bisher ermöglicht, wodurch die Produktivität des Reifenherstellprozesses erhöht wird, d.h. die Gesamtproduktionskosten des Reifenherstellverfahrens bei Silicamischungen gesenkt werden.

Weiterhin ist es wünschenswert, die Ethanol Emissionen, die von den niedermolekularen schwefelhaltigen Organosilanen stammen, bei der Herstellung der Kieselsäuremischungen zu reduzieren.

Diese Aufgaben werden durch erfindungsgemäße kieselsäurehaltige Kautschukmischen und deren Herstellverfahren gelöst.

Gegenstand der Erfindung sind daher mit Schwefel vulkanisierbare silikahaltige Kautschukmischungen mit verbesserter Prozessfähigkeit, dadurch gekennzeichnet, dass sie
a) ein silanhaltiges Butadienöl und/oder Polyisoprenöl
b) einen Schwefelspender mit Schmelzpunkt < 100 °C und neben den üblichen Hilfsmitteln
c) 5 bis 120 Teile einer Kieselsäure,
d) 0 bis 100 Teile eines Gummirußes, jeweils bezogen auf 100 Teile der ebenfalls enthaltenden
e) Kautschkpolymere, wie beispielsweise Styrol-Butadienkautschuk, Butadienoder Naturkautschuk, bzw. Verschnitte dieser Kautschukpolymeren enthalten.

Bevorzugt eingesetzt werden gefällte Kieselsäuren mit einer BET-Oberfläche (ISO 5794/1D) zwischen 100 und 250 m²/g, insbesondere wenn sie eine CTAB-Oberfläche (ASTM D3765-92) zwischen 100 und 250m²/g und eine DBP-Zahl zwischen 150 und 300 ml/100 g (ASTM D1208) aufweisen.

Die Kieselsäuren werden sowohl in Pulverform als auch geperlt oder granuliert zugesetzt. Es handelt sich dabei sowohl um die seit vielen Jahren bekannten Typen als auch um die Neuentwicklungen, wie sie z.B. in der DE-A 4 427 137 beschrieben werden.

Entsprechend dieser Erfindung können Zusatzstoffe, wie z.B. andere anorganische Füllstoffe als die obengenannten Kieselsäure und Silikate in die Kautschukmischung eingearbeitet werden, solang die eingesetzten Mengen den Zweck dieser Erfindung nicht beeinträchtigen.

Andere anorganische Füllstoffe sind z.B. Ruße wie SRF, GPF, FEF, HAF, ISAF, FT und MT.

Der Gesamtanteil der Füllstoffe sollte 120 Teile pro 100 Teile Polymer nicht überschreiten.

Zur Herstellung erfindungsgemäßer kieselsäurehaltiger Mischungen werden 1 bis 25 Teile, bevorzugt 5 bis 10 Teile eines silanhaltigen Butadienöls, gekennzeichnet durch einen Si-Gehalt von 1 % bis 10 % und eine Molmasse (Mₙ) von 1000 bis 10 000 verwendet.

Zusätzlich können üblicherweise in Kautschuk verwendete Weichmacher auf Erdölbasis eingesetzt werden.

Die Fertigung von Vulkanisaten aus den erfindungsgemäßen Kautschukmischungen erfordert lediglich die Herstellung von Rohkautschukmischungen nach der unten beschriebenen Methode, anschließendes Formen der Rohmischungen je nach den Erfordernissen und darauffolgende Vulkanisation in der gleichen Weise wie bei herkömmlichen Kautschukmischungen.

Als Vulkanisationsmittel zur Herstellung der Vulkanisate gemäß Erfindung werden 0,1 bis 10 Teile Schwefelspender, die einen Schmelzpunkt < 100°C aufweisen wie beispielsweise Dithiophosphatopolysulfide, geschwefeltes Rizinusöl oder schwefelhaltige Alkansäuren HOOC-(CₙH₂ₙ)-Sₓ, wobei n = 2 bis 5 und x = 2 bis 5 bedeutet, verwendet. Dithiophosphatopolysulfide sind bekannt und können wie in der DE 19 906 986 beschrieben hergestellt werden. Schwefelhaltige Alkansäuren HOOC-(CₙH₂ₙ)-Sₓ mit n = 2 bis 5 und x = 2 sind ebenfalls beschrieben und können gemäß DE-A 19 942 395 hergestellt werden. Zusätzlich zu den Schwefelspendern kann noch weiterer elementarer oder unlöslicher Schwefel verwendet werden.

Bevorzugt werden 0,5 bis 7 Teile eines Schwefelspenders, dadurch gekennzeichnet, dass diese einen Schmelzpunkt < 100°C aufweisen, in Kombination mit 0,1 bis 5 Teile Schwefel bezogen auf 100 Teile des Copolymeren bzw. dessen Mischungen mit anderen Dienpolymeren eingesetzt.

Zur Herstellung von Vulkanisaten gemäß dieser Erfindung werden vorzugsweise zusätzlich Vulkanisationsbeschleuniger verwendet. Zu den verwendeten Vulkanisationsbeschleunigern gehören z.B. Thiazolverbindungen, wie z.B. N-Cyclohexyl-2-benzthiazolsulfenamid, N,N-Diisopropyl-2-benzthiazolsulfenamid, 2-Mercaptobenzthiazol und Dibenzthiazyldisulfid;
Guanidinverbindungen, wie z.B. Diphenylguanidin, Triphenylguanidin, Diorthotolylguanidin;
Dithiophosphatverbindungen, wie z.B. Zink-Dibutyldithiophosphat, Zink-Dioctyldithiophosphat;
Imidazolinverbindungen, wie z.B. 2-Mercaptoimidazolin;
Thioharnstoffverbindungen, wie z.B. Diethylthioharnstoff, Trimethylthioharnstoff und Diorthotolylthioharnstoff; Thiuramverbindungen, wie z.B. Tetramethylthiuram-Monosulfid, Tetramethylthiuram-Disulfid, Tetraethylthiuram-Disulfid, Tetrabutylthiuram-Disulfid, Pentamethylen-Thiuram-Tetrasulfid; Dithiocarbamatverbindungen, wie z.B. Zink-Dimethyldithiocarbamat, Zink-Diethyldithiocarbamat, Zink-Di-nbutyldithiocarbamat, Zink-Ethylphenyldithiocarbamat, Zink-Butylphenyl-Dithiocarbamat, Natrium-Dimethyldithio-carbamat, Selen-Dimethyldithiocarbamat und Tellur-Dimethyldithiocarbamat;

Xanthatverbindungen, wie z.B. Zink-Dibutylxanthat oder Arylguanidiniumxanthogenate (beschrieben in EP-A 0 997 492).

Die genannten Vulkanisationsbeschleuniger werden einer Menge zwischen 1 und 20 Gew.-Teile, vorzugsweise zwischen 0,5 und 5 Gew.-Teile, bezogen auf 100 Gew.-Teile des Copolymeren bzw. dessen Abmischungen mit den anderen Polymeren eingesetzt.

Zur Herstellung von Vulkanisaten gemäß dieser Erfindung können weitere Kautschukhilfsmittel wie z.B. zusätzliche Vernetzer wie beispielsweise Schwefel, Alterungsschutzmittel, Wärmestabilisatoren, Lichtschutzmittel, Ozonschutzmittel, Verarbeitungshilfsmittel, Tackifier, Treibmittel, Wachse, Streckmittel, organische Säuren, Verzögerer, und Metalloxide eingesetzt werden.

Das silanhaltige Butadienöl und die Kieselsäure können während des Einmischens in die beanspruchten Kautschukmischungen zur Reaktion gebracht werden.

Optional kann auch die gesamte verwendete Kieselsäuremenge vorab separat oder im gleichen Mischaggregat mit dem silanhaltige Butadienöl modifiziert werden. Es ist auch möglich, nur einen Teil vorab zu modifizieren und den Rest ohne vorherige Modifizierung einzusetzen.

Ist Ruß als weiterer Füllstoff für die herzustellende Kautschukmischung vorgesehen, besteht in einer anderen Variante die Möglichkeit, das silanhaltige Butadienöl ganz oder zum Teil als Ruß/Öl Abmischung einzusetzen. Diese wird dann vorzugsweise in Form eines Granulats mit einem Gehalt von 30 bis 60 Gew.-% silanhaltigen Butadienöls bzw. 70 bis 40 Gew.-% Ruß verwendet. Die Herstellung ähnlicher Granulate wird in der DE-A 2 747 277 (US-A 4 128 438) beschrieben und kann hier analog durchgeführt werden.

Die Rohkautschukmischung wird gemäß nachstehend beschriebener Methode hergestellt. Die obengenannten Kautschukkomponenten, das silanhaltige Butadienöl, die amorphe Kieselsäure, und der gegebenenfalls vorhandene Ruß, sowie gegebenenfalls und ggf. weitere Additive werden in einem Knetgerät, z.B. einem Banbury-Innenmischer, bei einer Temperatur von ca. 120 bis 200°C 3 bis 10 Minuten lang geknetet. Dabei ist es vorteilhaft, die Mischung am Anfang des Knetvorgangs zum besseren dispersiven Verteilen der Kieselsäure bis zu 1,5 min ohne das silanhaltige Butadienöl zu kneten, bevor dann das silanhaltige Butadienöl der Mischung zugeführt wird. Dieser gesamte Knetvorgang, d.h Mischstufe kann mehrmals wiederholt werden um die Dispersion der festen Zuschlagstoffe, in erster Linie der Kieselsäure und ggf. des Ruß zu verbessern. Bei erfindungsgemäßer Kautschukmischung genügt vorzugsweise eine Mischstufe im Knetgerät bei Temperaturen zwischen 160 und 180 °C. Der so vorgefertigten Rohmischung werden dann die Vulkanisationsmittel wie Beschleuniger, Schwefel und ein Schwefelspender mit Schmelzpunkt <100 °C und gegebenenfalls ein sonstiges Vulkanisationsmittel oder Verzögerer hinzugefügt und entweder im Banbury-Innenmischer oder auf einer Mischwalze bei Temperaturen <120 °C weitere 5 bis 30 Minuten gemischt und die fertige Kautschukmischung anschließend als Kautschukfell oder in Form von Streifen ausgezogen.

Die gummitechnische Prüfung der aus den erfindungsgemäßen Mischungen hergestellten Vulkanisate zeigt, dass sich durch Verwendung von silanhaltigem Butadienöl in Kombination mit Schwefelspendern mit Schmelzpunkt <100 °C gegenüber der Verwendung von schwefelhaltigen Organosilanen in kieselsäurehaltigen Mischungen in Styrol-Butadien-Kautschuken, ein deutlich höherer Crossover erzielt werden kann, was bei einer Laufflächenmischung einer höheren Nassrutschfestigkeit bei gleichzeitig niedrigererem Rollwiderstand entspricht.

Diese Vulkanisate finden Verwendung bei der Herstellung von Formkörpern und strukturellen Komponenten von Reifen.

### Beispiele

Es fanden die folgenden kieselsäurehaltigen Rezepturen Verwendung.

| | **Control** | **Erfindungsgemäße Mischung 1** | **Erfindungsgemäße Mischung 2** |
|---|---|---|---|
| Buna VSL 5025-1 | 96,0 | 96,0 | 96,0 |
| Buna CB 24 | 30,0 | 30,0 | 30,0 |
| Ultrasil 7000 GR | 70,0 | 70,0 | 70,0 |
| Ruß N 115 | 5,0 | 5,0 | 5,0 |
| Ruß N 330 | -- | 6,25 | 6,25 |
| Silan X 50 S | 12,5 | -- | -- |
| silanisiertes Butadienöl | -- | 6,25 | 10,0 |
| Stearinsäure | 1,0 | 1,0 | 1,0 |
| Zinkoxid RS | 3,0 | 3,0 | 3,0 |
| Vulkanox 4020 | 1,0 | 1,0 | 1,0 |
| Vulkanox HS | 1,0 | 1,0 | 1,0 |
| Antilux 500 L | 1,5 | 1,5 | 1,5 |
| Weichmacher 450 | 8,0 | 8,0 | 8,0 |
| Rhenogran S 80 | 1,9 | 1,9 | 1,9 |
| Rhenogran CBS 80 | 1,9 | 1,9 | 1,9 |
| Rhenogran DPG 80 | 2,5 | 2,5 | 2,5 |
| Rhenofit SASD | -- | 2,0 | 2,0 |

Buna VSL 5025-1, Buna CB 24, Vulkanox® 4020, Vulkanox® HS Handelsprodukte der Bayer AG Leverkusen
Ultrasil® 7000 GR und Silan X 50 S, Handelsprodukte der Degussa AG.
Rhenogran® S 80, Rhenogran® CBS 80, Rhenogran® DPG 80, Rhenofit® SASD und Antilux® 500 L, Handelsprodukte der Rhein Chemie Rheinau GmbH
Weichmacher 450, hocharomatischen Weichmacheröl der Firma Fuchs-DEA

Mischzeit und Temperatur während des Mischvorgangs der Control-Mischung in einem Laborinnenmischer Werner und Pfleiderer GK 1,5 E, Füllgrad 75 % bei 100 °C Vortemperierung

| | **Control** | **Control** | **Control** | **Control** |
|---|---|---|---|---|
| **Mischstufe** | Stufe 1 | Stufe 2 | Stufe 3 | Stufe 4 |
| **T**_{**max**} **Einstich(°C)** | 151 | 151 | 144 | 112 |
| **Effektive Gesamtmischzeit (Sek)** | 220 | 350 | 480 | 550 |
| **ML (1+4) 100 °C** | 144 | 102 | 86 | 69 |

Zuerst erfolgt die Zugabe der Polymeren, dann wird 1 min geknetet, dann erfolgt die Zugabe der 1/2 Menge Ultrasil, die gesamte Menge X50S, wonach 1 min geknetet wird und dann erfolgt die Zugabe der restlichen Komponenten mit Ausnahme der letzten 4 Ingredientien der Rezepturtabelle. Letztere werden erst in Stufe 4 der Mischung zugesetzt. Zwischen den einzelnen Stufen wird die Mischung jeweils 24 h bei RT gelagert.

**Tabelle 2:**

| Mischungseigenschaften erfindungsgemäßer Mischungen | | | | | | |
|---|---|---|---|---|---|---|
| | **Mischung 1a** | **Mischung 1b** | **Mischung 1c** | **Mischung 2a** | **Mischung 2b** | **Mischung 2c** |
| **Agens** | 6 phr silanisiertes Butadienöl | 6 phr silanisiertes Butadienöl | 6 phr silanisiertes Butadienöl | 10 phr silanisiertes Butadienöl | 10 phr silanisiertes Butadienöl | 6 phr silanisiertes Butadienöl |
| **Mischstufe** | Stufe 1 | Stufe 1 | Stufe 1 | Stufe 1 | Stufe 1 | Stufe 1 |
| **Mischprocedere** | +130 Sek. 40 U/min | + 260 Sek 40 U/min | +130 Sek. 60 U/min | +130 Sek. 40 U/min | +260 Sek. 60 U/min | +260Sek. 60 U/min |
| **T**_{**max**} **Einstich(°C)** | 162 | 166 | 185 | 162 | 185 | 186 |
| **Effektive Gesamtmischzeit (Sek)** | 350 | 480 | 350 | 350 | 480 | 480 |
| **Verweilzeit Silan im Innenmischer (Sec)** | 130 | 260 | 130 | 130 | 260 | 260 |
| **ML (1+4) 100°C** | 135 | 106 | 117 | 94 | 94 | 119 |

Wie ersichtlich muss die Control-Mischung unter Temperaturkontrolle (Tₘₐₓ < 155 °C) in 4 Stufen gemischt werden, um in eine verarbeitungsfähigen Viskositätsbereich zu gelangen, während erfindungsgemäße Mischungen bereits nach einer Stufe der Control-Mischung nach 2 - 3 Stufen entspricht, d.h. erfindungsgemäße Mischungen ermöglichen das Einsparen von 1-2 Mischstufen gegenüber dem Stand der Technik

Deutlich ist erkennbar, dass die erfindungsgemäßen Mischungen 1b, 2a, 2b und 2c das gleiche dynamische Eigenschaftsniveau erreichen wie die Kontrollmischung. Die Mischung 2a ergibt bei höherer Dosierung des silanisierten Butadienöls aber geringerer effektiver Mischzeit Endeigenschaften, die mit denen der Kontrollmischung übereinstimmen.

### Dynamisch-mechanische Eigenschaften

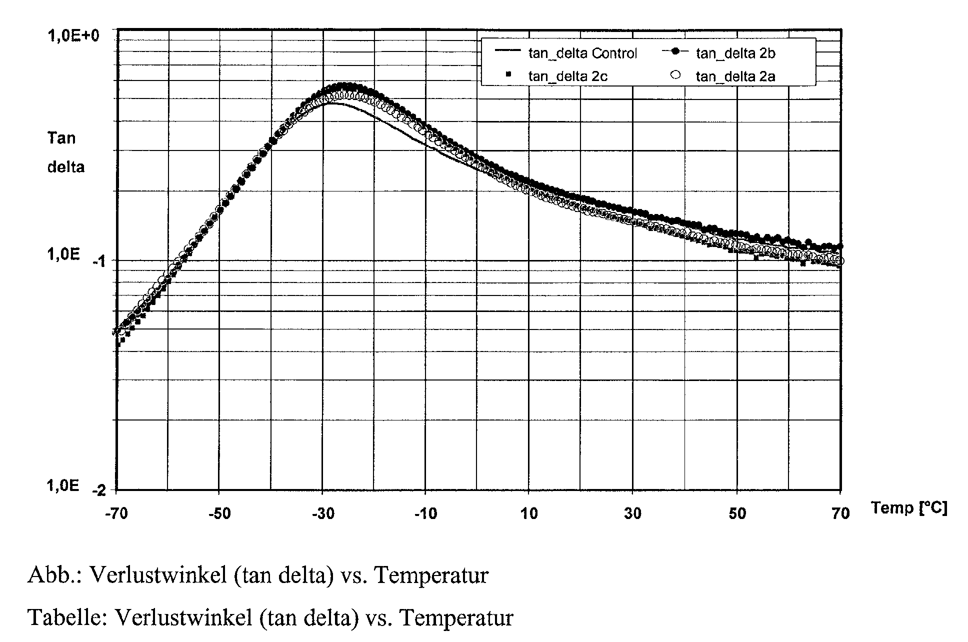

| **Temp** | **2a** | **2b** | **2c** | **Control** |
|---|---|---|---|---|
| **°C** | **tan δ** | **tan δ** | **tan δ** | **tan δ** |
| -20,0 | 0,4960 | 0,5402 | 0,5269 | 0,4290 |
| -10,0 | 0,3649 | 0,3873 | 0,3801 | 0,3210 |
| 0,0 | 0,2562 | 0,2748 | 0,2624 | 0,2463 |
| 10,0 | 0,2002 | 0,2179 | 0,2046 | 0,2077 |
| 50,0 | 0,1171 | 0,1315 | 0,1104 | 0,1233 |
| 60,0 | 0,1064 | 0,1200 | 0,1014 | 0,1136 |

Es wurden Schubmodulmessungen an Vulkanisaten in Abhängigkeit von der Temperatur bei 1 Hz Frequenz und 0,5 % Verformung durchgeführt. Obige Abbildung und Tabelle zeigen exemplarisch einen Vergleich zwischen der Kontrollmischung und Mischungen 2a, 2b sowie 2c.

Es ist erkennbar, dass die erfindungsgemäßen Vulkanisate im Bereich tiefer Temperaturen (-30 bis 0 °C) deutlich höhere tan δ-Werte ergeben als die Kontrollmischung. Nach gängigen Vorstellungen bedeutet dies bei Laufflächenmischungen potentiell höhere Nassrutschfestigkeiten.

Die in der obigen Abbildung erkennbaren tan δ-Werte bei Temperaturen von 50 - 60 °C würden, bei gleicher Argumentationsweise, für einen potentiell niedrigeren Rollwiderstand sprechen. Besonders die Mischungen 2a und 2c zeigen im Vergleich zum Control die höheren tan δ bei niedrigen und die niedrigren tan δ-Werte bei höheren Temperaturen. Dieses "cross over" ist in jedem Falle wünschenswert.

Es ist zu erkennen, dass die dynamischen Eigenschaften bei Verwendung erfindungsgemäßer Mischungen einen cross-over-Effekt erzeugen, der zu einer verbesserten Nassrutschfestigkeit und einem verminderten Rollwiderstand führen sollte.

### Herstellung des silanisierten Butadienöls

378,4 g PolyBd® R 20 LM (hydroxyterminiertes Polybutadien Fa. Elf Atochem, Molmasse 1200 g/mol, OH-Zahl: 109 mg KOH/g) werden bei Raumtemperatur mit 2,9 g Zinn-di(2-ethyl)hexanoat (Desmorapid® SO Fa. Rhein Chemie Rheinau GmbH) und 200 g 3-Isocyanato-n-propyl-triethoxysilan (Fa. Fluka) versetzt. Nach 2 h beträgt der NCO-Gehalt 0,0%.

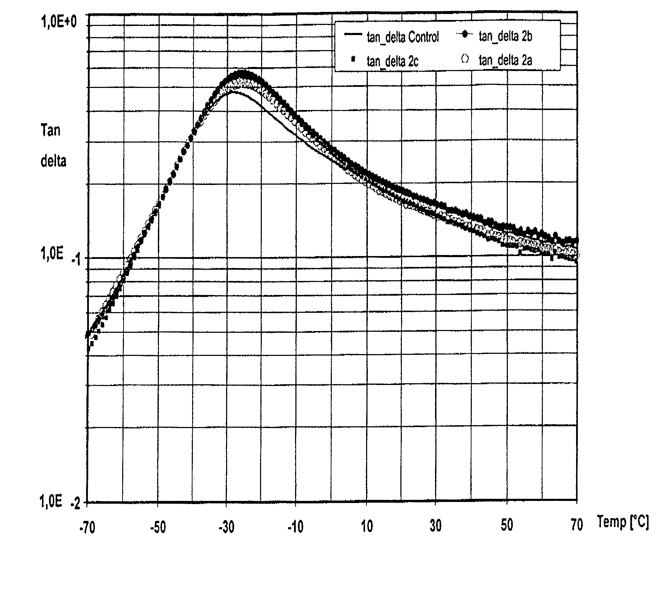

## Patentansprüche

1. Silikahaltige Kautschukmischungen mit verbesserter Prozessfähigkeit, **dadurch gekennzeichnet, dass** sie
a) ein silanhaltiges Butadienöl und/oder Polyisoprenöl
b) einen Schwefelspender mit Schmelzpunkt < 100 °C und neben den üblichen Hilfsmitteln
c) 5 bis 120 Teile einer Kieselsäure,
d) 0 bis 100 Teile eines Gummirußes, jeweils bezogen auf 100 Teile der ebenfalls enthaltenden
e) Kautschkpolymere, wie beispielsweise Styrol-Butadienkautschuk, Butadien- oder Naturkautschuk, bzw. Verschnitte dieser Kautschukpolymeren enthalten.

2. Kautschukmischung nach Anspruch 1, wobei b) ein Phosphorylpolysulfid ist.

3. Kautschukmischung nach Anspruch 1 und 2, wobei die Kieselsäuren vor dem Einmischen in die Kautschukmischung mit dem silanhaltiges Butadienöl vermischt oder zur Reaktion gebracht wird.

4. Verfahren zur Herstellung der silikahaltige Kautschukmischungen gemäß Anspruch 1, **dadurch gekennzeichnet, dass** man die Kautschukpolymeren, das silanhaltige Butadienöl, die Kieselsäure und den gegebenenfalls vorhandenen Ruß, sowie gegebenenfalls. einen Weichmacher, in einem Innenmischer bei einer Temperatur von 120 °C - 200 °C mischt, dann einen Schwefelspender mit Schmelzpunkt < 100 °C, sowie gegebenenfalls weitere Vernetzter und/oder Verzögerer in einem zweiten Mischschritt entweder im Innenmischer oder auf der Mischwalze bei Temperaturen < 120 °C weiter mischt.

5. Verwendung der Kautschukmischungen nach Ansprüchen 1 bis 3 zur Herstellung von Formkörpern und strukturellen Komponenten von Reifen.

6. Kautschukartikel enthaltend Kautschukmischungen nach Ansprüchen 1 bis 3.

7. Kautschukartikel gemäß Anspruch 6, **dadurch gekennzeichnet, dass** es sich um Reifen handelt.
